Europäisches Patentamt

(19) European Patent Office

Office européen des brevets

(11) Publication number: **0 032 418**
**B1**

(12) **EUROPEAN PATENT SPECIFICATION**

(45) Date of publication of patent specification: **10.10.84**　　(51) Int. Cl.³: **F 16 B 7/04**

(21) Application number: **81300018.9**

(22) Date of filing: **05.01.81**

(54) **Method and means for releasably rigidly fastening together beams and like profiles.**

(30) Priority: **07.01.80 JPU 261/80**

(43) Date of publication of application:
**22.07.81 Bulletin 81/29**

(45) Publication of the grant of the patent:
**10.10.84 Bulletin 84/41**

(84) Designated Contracting States:
**BE DE FR NL SE**

(56) References cited:
**DE-B-2 245 862**
**DE-U-1 933 380**
**FR-A- 579 382**
**FR-A-1 526 947**
**FR-A-2 182 351**
**FR-A-2 268 968**
**FR-E- 41 816**
**GB-A- 553 366**
**GB-A- 973 117**
**US-A-3 144 105**
**US-A-3 589 660**
**US-A-3 701 613**

(73) Proprietor: **Nagashima, Masaya**
**4-6 Takayanagi 3-chome**
**City of Kisarazu Chiba Prefecture (JP)**

(72) Inventor: **Nagashima, Masaya**
**4-6 Takayanagi 3-chome**
**City of Kisarazu Chiba Prefecture (JP)**

(74) Representative: **Fallace, Edward Albert et al**
**Phillips & Leigh 7 Staple Inn Holborn**
**London WC1V 70F (GB)**

Courier Press, Leamington Spa, England.

EP 0 032 418 B1

## Description

The present invention relates to a method and means for releasably rigidly fastening together beams and like flanged metal profiles lying across one another at an angle with flanges in contact, and is particularly useful when the flanged metal profiles, *e.g.* H-beams, lie across one another substantially at right angles.

For instance, when a bridge is to be erected, a temporary bridge may first be erected as scaffolding, and later disassembled and removed after completion of the permanent bridge.

The general practice in building a bridge has been that flanged profiles such as H-beams are rigidly fastened together where they cross by bolting thus necessitating forming bolt holes in the profiles, or by riveting or welding them together with or without doubling plates between them. If such a procedure is adopted when erecting a temporary structure such as a temporary bridge, disadvantages or difficulties arise. For instance assembly takes a long time, disassembly is arduous and the profiles themselves are damaged so restricting their repeated use.

It has been proposed to join crossing flanged profiles together by means of a block having in it V-grooving to be located in an angle between the profiles with the flanges in the grooving and to hold the block in position by a pair of hook bolts which pass through the block and hook onto the upper and lower flanges respectively on the sides of the profiles remote from the block (see DE—U—1 933 380).

It has also been proposed to join crossing flanged profiles by means of a pair of identical members, each having channels which intersect and which receive the contacting flanges of the profiles respectively, for example by threading a member along a flange or by threading a flange through the respective channel in a member. The members are clamped together by a bolt in each entering an open-ended slot in the other, the clamping direction being at right angles to the planes of the flanges (see US—A—3 144 105).

The present invention seeks to provide a simple form of means for releasably rigidly securing together crossing flanged profiles which however enables greater stability of the resulting structure to be achieved than was obtained hitherto.

According to the invention means for this purpose comprises a plurality of like members each having portions defining recesses extending at an angle to one another to receive contacting flanges of the crossing profiles, and means to secure the members together thereby to hold the profiles in position, and is characterised by there being four clamp members, one to be fitted in each angle formed by the crossing profiles, each clamp member having a pair of sides extending at an angle to one another corresponding to an angle between the crossing profiles so that the slides lie along the contacting flanges of the profiles, each side of the clamp member having projecting from it a plurality of ribs formed with cut-outs snugly to fit on the respective flange along which the side extends, the side to contact the upper flange of the lower profile having in it bolt holes above the level of its cut-outs and the side to contact the lower flange of the upper profile having bolt holes below the level of its cut-outs, and there being bolts to extend through aligned bolt holes in facing sides of the clamp members to secure the clamp members in pairs to the lower flange and upper flange respectively.

According to the invention moreover there is provided a method of releasably rigidly securing together crossing flanged profiles with the means of the invention, which method is characterised by the steps of applying one of the clamp members at each angle formed between the crossing profiles with the cut-outs snugly fitting on the respective flanges of the profiles and with the bolt holes in the sides contacting the upper flange of the lower profile above the level of that flange and the bolt holes in the sides contacting the lower flange of the upper profile below the level of that flange, threading the bolts through aligned bolt holes of facing sides of each pair of adjacent clamp members, and applying nuts to the bolts to clamp the pairs to the profiles.

The following is a detailed description of the presently preferred, illustrative embodiment according to the present invention, which embodiment is shown in the accompanying drawings, in which:—

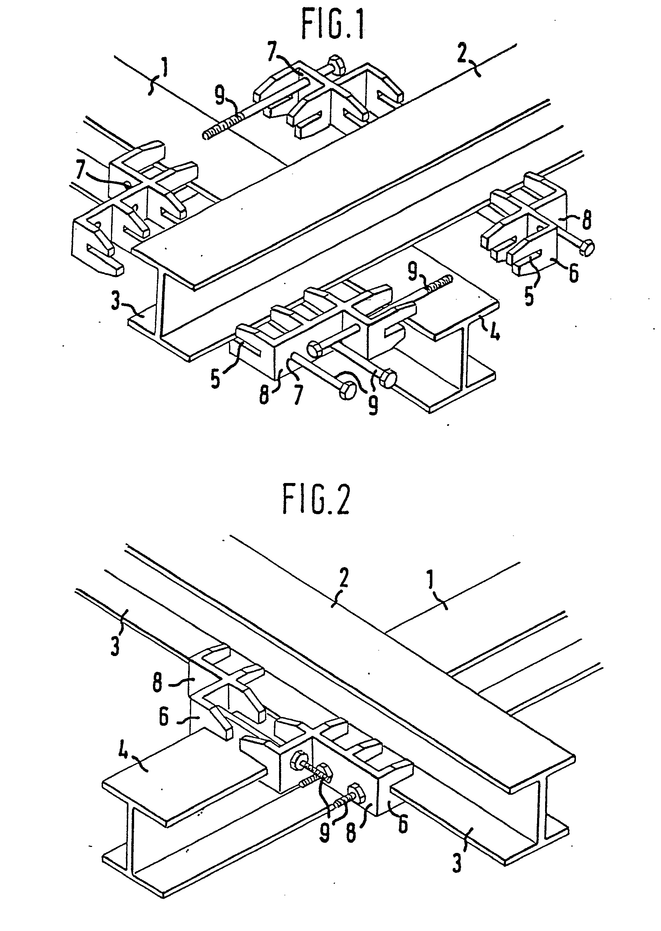

Fig. 1 is an exploded perspective view of portions of two metal H-beams as examples of the standardized flanged metal profiles lying across one another substantially at right angles in an overlapping relationship and the means according to the present invention for securing the profiles together prior to being secured in position, and

Fig. 2 is a perspective view showing the H-beams rigidly fastened together.

Referring now to the drawings, it is assumed that two standardized metal profiles, e.g. standard H-beams 1 and 2, lie across one another at an angle e.g. right angles, with their upper and lower flanges 4 and 3 respectively contacting one another and they are intended to be releasably but rigidly fastened together. For this purpose, as a rule a set of four clamps 8 are provided to be applied in respective angles formed by the intersection of H-beams 1 and 2. Each of clamps 8 comprises a main body which has a generally L-shaped configuration in plan view so as to have two vertical sides meeting substantially at right angles, the angles respectively conforming to the angles made between H-beams 1 and 2. Each clamp has a number of ribs, e.g. two or three vertical ribs 6 as shown, integral with each side and protruding at right angles from the outside faces of the sides. The ribs 6 are preferably provided at each end, and, if necessary, additionally at the middle of the respective sides. Further, the ribs 6 are formed with cutouts or grooves 5 formed orthogonally to their surfaces such that cutouts 5 can snugly receive the edge portions of lower flange 3 and upper flange 4 of intersected H-beams 2 and 1, respectively, when the clamps are in position.

As will be seen, the clamps 8 are rigidly secured to the profiles by fastening means consisting of nuts and bolts 9 which pass through one or more holes 7 in each of the portions of the sides of the clamps 8 protruding below the flange 3 of profile 2 and above flange 4 of profile 1 so that no holes need be produced in the profiles themselves. In other words the bolts 9 securing clamps 8 to profile 1 pass over the top of the flange 4 and those securing clamps 8 to the profile 2 pass under the flange 3.

In the illustrated case, because of the disposition of flanges 4 and 3 and thus of the bolt holes in the clamps 8, four different clamps 8 are used each corresponding to one particular angle. However if desired, the clamps 8 for diagonally opposite angles may be the same.

Thus, it will be appreciated that when the H-beams 1, 2 are to be releasably rigidly fastened together, firstly an appropriate clamp 8 is fitted in each angle formed by intersection of the H-beams 1, 2, the cut-outs 5 being forced on to edge portions of the flanges 4, 3 by a blow to the clamp body, and then the respective confronting sides of clamps 8 projecting beyond flanges 3 and 4 are respectively fastened together by the nuts and bolts. The number and dimensions of the ribs 6 and bolts 9 can be suitably selected depending upon the required strength of the temporary bridge or other structure.

Although the fastening means according to the present invention has been described and shown as being utilized to fasten together H-beams, it will be appreciated that it may be utilized equally for fastening other standardized metal profiles so long as they have plate-like edge portions extending lengthwise similarly to the flanges of the H-beams.

From the foregoing it will be understood that by practising the present invention two crossing standardized metal profiles can be rigidly fastened together without the need for drilling bolt holes, or effecting a welding operation, etc. and at the same time the disassembly and withdrawal of the metal profiles is made easy, causing no damage thereto, so their repeated use is possible.

## Claims

1. Means for releasably rigidly securing together crossing flanged metal profiles (1, 2), the means comprising a plurality of like clamps (8), each having portions defining recesses extending at an angle to one another to receive contacting flanges (3, 4) of the crossing profiles, and bolts (9) to secure the clamps together thereby to hold the profiles in position, characterised in that there are provided four clamps (8), one to be fitted in each angle formed by the crossing profiles (1, 2), each clamp (8) having a pair of sides extending at an angle to one another corresponding to an angle between the crossing profiles so that the sides lie along the contacting flanges (4, 3) of the profiles, each side of the clamp (8) having projecting from it a plurality of ribs (6) formed with cut-outs (5) snugly to fit on the respective flange (4 or 3) along which the side extends, the side to contact the upper flange (4) of the lower profile (1) having in it bolt holes (7) above the level of its cut-outs (5) and the side to contact the lower flange (3) of the upper profile (2) having bolt holes (7) below the level of its cut-outs (5), and in that the bolts (9) are provided to extend through aligned bolt holes in facing sides of the clamp members to secure the clamp members (8) in pairs to the lower flange (3) and upper flange (4) respectively.

2. A method of releasably rigidly securing together flanged metal profiles (1, 2) lying across one another at an angle with flanges (3, 4) in contact with the means of claim 1, characterised by the steps of applying one of the clamps (8) at each angle formed between the crossing profiles (1, 2) with the cut-outs (5) snugly fitting on the respective flanges (4, 3) of the profiles (1, 2) and with the bolt holes (7) in the sides contacting the upper flange (4) of the lower profile above the level of that flange and the bolt holes (7) in the sides contacting the lower flange (3) of the upper profile (2) below the level of that flange, threading the bolts (9) through aligned bolt holes of facing sides of each pair of adjacent clamps (8), and applying nuts to the bolts to clamp the pairs to the profiles.

## Revendications

1. Système de réunion rigide, démontable, de profilés métalliques à brides croisés (1, 2), comportant une pluralité de moyens de serrage similaires (8), munis de parties délimitant des creux, qui forment un angle entre eux et servent à recevoir les brides (3, 4) mutuellement appliquées des profilés croisés, ainsi que des boulons (9) servant à réunir lesdits moyens de serrage de manière à fixer les profilés dans leur position mutuelle requise, caractérisé en ce qu'il comporte quatre moyens de serrage (8) pour les quatre angles formés par les profilés croisés (1, 2) dont chaque moyen de serrage (8) présente deux faces, qui font un angle entre elles correspondant à l'un ou l'autre des angles formés par les profilés croisés, de manière à s'étendre le long des brides (4, 3) mutuellement appliquées des profilés; en ce que chaque face des moyens de serrage (8) présente une pluralité de nervures (6) munies d'entailles (5), qui coopèrent étroitement avec la bride correspondante (4 ou 3), le long de laquelle cette face s'étend; en ce que la face destinée à s'appliquer à la bride supérieure (4) du profilé inférieur (1) présente des trous à boulon (7) situés au-dessus du niveau de ses entailles (5) et la face destinée à s'appliquer à la bride intérieure (3) du profilé supérieur (2) présente des trous à boulon (7) situés sous le niveau de ses entailles (5); et en ce que sont prévus des boulons (5) destinés à passer par les trous à boulon alignés des faces opposées desdits moyens de serrage (8) pour fixer ces derniers deux par deux respectivement à la bride inférieure (3) et à la bride supérieure (4).

2. Procédé pour la réunion rigide, démontable, de profilés métalliques à brides (1, 2), superposés de manière qu'ils forment un certain angle entre eux et que leurs brides (3, 4) s'appliquent l'une à l'autre, réunion effectuée par le système selon la revendication 1, caractérisé en ce qu'il comporte les stades successifs suivants: application d'un moyen de serrage (8) dans chacun des quatre angles formés par les profilés croisés (1, 2), de manière que lesdites entailles (5) coopèrent étroitement avec les brides correspondantes (4, 3) des profilés (1, 2) et que les trous à boulon (7) des faces appliquées à la bride supérieure (4) du profilé inférieur (1) se trouvent au-dessus du niveau de cette bride et les trous à boulon (7) des faces appliquées à bride inférieure (3) du profilé supérieur (2) se trouvent sous le niveau de cette bride, introduction des boulons (9) dans les trous à boulon alignés des faces opposées de chaque paire de moyens de serrage adjacents (8); et vissage d'écrous sur les boulons pour serrer les paires de profilés.

**Patentansprüche**

1. Mittel zur lösbaren, festen Verbindung von sich kreuzenden Metallprofilen (1, 2) mit Flanschen, bestehend aus mehreren gleichartigen Klemmen (8), deren jede Bereiche mit Ausnehmungen hat, welche sich im Winkel zueinander erstrecken, um aneinander anliegende Flansche (3, 4) der sich kreuzenden Profile aufzunehmen, und Bolzen (9) zum Verbinden der Klemmen und damit zur Festlegung der Profile in bestimmter Lage, dadurch gekennzeichnet, daß vier Klemmen (8) vorhanden sind, die jeweils in einen der von den sich kreuzenden Profilen (1, 2) gebildeten Winkel einsetzbar sind und von denen jede ein Paar Schenkel hat, die sich zueinander in einem Winkel erstrecken, welcher einem Winkel zwischen den sich kreuzenden Profilen entspricht, so daß sich die Schenkel längs der aneinander anliegenden Flansche (3, 4) der Profile erstrecken, jeder Schenkel der Klemmen (8) mehrere vorstehende Rippen (6) mit darin ausgebildeten Ausschnitten (5) hat, die auf den jeweiligen Flansch (4 oder 3) passen, längs dessen sich der Schenkel erstreckt, der am oberen Flansch (4) des unteren Profils (1) anliegende Schenkel oberhalb seiner Ausschnitte (5) und der am unteren Flansch (3) des oberen Profils (2) anliegende Schenkel unterhalb seiner Ausschnitte (5) Bolzenlöcher (7) aufweisen, und vorgesehen ist, daß sich die Bolzen (9) durch fluchtende Bolzenlöcher in gegenüberliegenden Schenkeln der Klemmen (8) erstrecken, um diese jeweils paarweise gegen den unteren Flansch (3) bzw. den oberen Flansch (4) festzuziehen.

2. Verfahren zur lösbaren, festen Verbindung von mit Flanschen versehenen Matallprofilen (1, 2), die sich mit aneinander liegenden Flanschen (3, 4) kreuzen, mit den Mitteln nach Anspruch 1, gekennzeichnet durch die Verfahrensschritte, daß je eine der Klemmen (8) in jeden der zwischen den sich kreuzenden Profilen (1, 2) gebildeten Winkel eingesetzt wird, wobei die Ausschnitte (5) auf die entsprechenden Flansche (4, 3) der Profile (1, 2) passen und die Bolzenlöcher (7) in dem am oberen Flansch (4) des unteren Profils anliegenden Schenkel oderhalb dieses Flanschs und die Bolzenlöcher (7) in dem am unteren Flansch (3) des oberen Profils (2) anliegenden Schenkel unterhalb dieses Flanschs liegen, die Bolzen (9) durch fluchtende Bolzenlöcher in gegenüberliegenden Schenkeln jedes Paars benachbarter Klemmen (8) gesteckt und Muttern auf die Bolzen aufgeschraubt werden, um die Kelmmenpaare mit den Profilen zu verklemmen.

# FIG.1

# FIG.2